(19) Europäisches Patentamt
European Patent Office
Office européen des brevets

(11) Veröffentlichungsnummer: **0 601 008 B1**

(12) # EUROPÄISCHE PATENTSCHRIFT

(45) Veröffentlichungstag der Patentschrift: **22.11.95**

(51) Int. Cl.⁶: **C07F 7/08**, C07F 7/18, C08G 77/38

(21) Anmeldenummer: **92918209.5**

(22) Anmeldetag: **27.08.92**

(86) Internationale Anmeldenummer:
**PCT/EP92/01982**

(87) Internationale Veröffentlichungsnummer:
**WO 93/05051 (18.03.93 93/08)**

(54) **VERFAHREN ZUR HERSTELLUNG VON EPOXYGRUPPEN AUFWEISENDEN ORGANOSILICIUMVERBINDUNGEN.**

(30) Priorität: **30.08.91 DE 4128894**

(43) Veröffentlichungstag der Anmeldung:
**15.06.94 Patentblatt 94/24**

(45) Bekanntmachung des Hinweises auf die Patenterteilung:
**22.11.95 Patentblatt 95/47**

(84) Benannte Vertragsstaaten:
**AT BE CH DE ES FR GB IT LI NL**

(56) Entgegenhaltungen:
**EP-A- 0 179 355**
**EP-A- 0 300 163**
**DE-A- 2 835 940**
**US-A- 3 219 624**
**US-A- 3 455 877**
**US-A- 3 642 830**
**US-A- 4 882 442**

(73) Patentinhaber: **WACKER-CHEMIE GMBH**
**Hanns-Seidel-Platz 4**
**D-81737 München (DE)**

(72) Erfinder: **HERZIG, Christian**
**Shröckenbauer 1**
**D-8221 Taching am See (DE)**
Erfinder: **GILCH, Doris**
**Axöder-Ring 104**
**Dj-8330 Eggenfelden (DE)**
Erfinder: **BINDL, Johann**
**In den Grüben 172**
**D-8262 Burghausen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung von Organosiliciumverbindungen, die SiC-gebundene organische Reste mit mindestens einer Epoxygruppe je Rest enthalten.

Aus DE-A 28 359 40 ist ein Verfahren zur Herstellung von bicyclischen Terpen-Oxiranen durch Epoxidieren von ungesättigten Terpenkohlenwasserstoffen mit Peressigsäure-Essigsäure-Mischung; die noch geringe Mengen Schwefelsäure enthält, in Gegenwart von chlorierten Kohlenwasserstoffen und 0,3 bis 0,7 Mol Alkalicarbonat oder 0,6 bis 1,4 Mol Alkalihydrogencarbonat pro Mol Säuregehalt der Peressigsäuremischung bekannt. Gemäß Beispiel 1 wird α-Pinenepoxid durch Epoxidierung von α-Pinen mit Peressigsäure in Gegenwart von Chloroform und Soda in einer Ausbeute von 93 % der Theorie erhalten.

In EP-B 55 387 (bzw. entsprechende US-A 4 882 442) ist ein Verfahren zur Herstellung von Epoxiden, z.B. α-Pinenepoxid, durch Epoxidation der zugrundeliegenden Olefine mit starke Säuren enthaltender Peressigsäure in Gegenwart von Lösungsmitteln, z.B. Chlorkohlenwasserstoffen, beschrieben, wobei die starke Säure, z.B. Schwefelsäure, vor der Zugabe der Peressigsäure zu dem Reaktionsgemisch mit einer anorganischen Base gebunden wird und das Reaktionsgemisch neben dem entsprechenden Olefin noch 0,50 bis 0,74 val säurebindendes Mittel, z.B. Natriumcarbonat oder Natriumhydrogencarbonat, pro Mol Gesamtmenge an Peressigsäure und Essigsäure enthält. Gemäß Beispiel 1 wird durch die Verwendung von gepufferter Gleichgewichts-Peressigsäure und die Pufferung der Essigsäure während der Epoxidierung α-Pinenepoxid in Ausbeuten von 95 % der Theorie erhalten, während gemäß Vergleichsbeispiel 1, in dem nach dem Verfahren von DE-A 28 35 940 gearbeitet wurde, d.h. die Essigsäure während der Epoxidierung gepuffert wurde, aber ungepufferte Gleichgewichts-Peressigsäure eingesetzt wurde, α-Pinenepoxid in Ausbeuten von 71 % erhalten wird.

Aus DE-AS 1 061 321 (bzw. entsprechende US-A 3 455 877) ist ein Verfahren zur Herstellung von Organosiliciumverbindungen, in denen Epoxygruppen oder Epoxygruppen enthaltende Reste mittels Silicium-Kohlenstoff-Bindung an das Siliciumatom gebunden sind, durch Umsetzung von Organosiliciumverbindungen, die mindestens eine durch Si-C-Bindung an das Si-Atom gebundene C=C-Gruppe im Molekül enthalten, mit Persäuren, z.B. Peressigsäure, bekannt. Gemäß den Beispielen 3 bis 6 werden die Epoxidierungen mit Peressigsäure in Gegenwart von säurebindenden Mitteln, wie Natriumacetat, durchgeführt und die entsprechenden Organo(poly)siloxane mit SiC-gebundenen, Epoxygruppen enthaltenden Resten in Ausbeuten von umgerechnet 18 bis 55 % der Theorie erhalten.

In E. P. Plueddemann et al., J. Am. Chem. Soc. 81, 2632 (1959), ist die Epoxidierung von einem Vinylsiloxan und einem Allylsilan mit Peressigsäure in Gegenwart von einem säurebindenden Mittel, wie Natriumacetat, beschrieben, wobei im ersteren Fall vergelte Partikel anfallen und im letzteren Fall kein Epoxysilan erhalten wird, da alle Allylgruppen unter dem Einfluß der Säure vom Siliciumatom abgespalten wurden.

Es bestand daher die Aufgabe, ein Verfahren zur Herstellung von Organosiliciumverbindungen, die SiC-gebundene organische Reste mit mindestens einer Epoxygruppe je Rest enthalten, bereitzustellen, bei dem die Organosiliciumverbindungen in hohen Ausbeuten erhalten werden. Die Aufgabe wird durch die Erfindung gelöst.

Gegenstand der Erfindung ist ein Verfahren zur Herstellung von Organosiliciumverbindungen, die SiC-gebundene organische Reste mit mindestens einer Epoxygruppe je Rest enthalten, durch Epoxidierung von Organosiliciumverbindungen, die SiC-gebundene organische Reste mit mindestens einer Kohlenstoff-Kohlenstoff-Doppelbindung je Rest enthalten, mit Peressigsäure, die Essigsäure und katalytische Mengen an starker Säure enthält, in Gegenwart von organischen Lösungsmitteln und säurebindenden Mitteln dadurch gekennzeichnet, daß die starke Säure vor der Epoxidierung mit Peressigsäure mit einer mindestens äquivalenten Menge einer Base gebunden wird und während der Epoxidierung 0,4 bis 0,8 val säurebindende Mittel pro Mol Gesamtsäure an Peressigsäure und Essigsäure vorliegen.

Vorzugsweise werden zur Epoxidierung Lösungen der Peressigsäure in Essigsäure, die katalytische Mengen an starken Säuren enthalten, wie technische Peressigsäure, verwendet. Peressigsäure wird durch Umsetzung von Essigsäure mit Wasserstoffperoxid in Gegenwart von katalytischen Mengen an starker Säure hergestellt. Technische Peressigsäure stellt daher ein Gemisch aus Peressigsäure, Essigsäure, Wasserstoffperoxid, Wasser und starke Säure dar. Als starke Säure wird vorzugsweise Schwefelsäure verwendet, die in Mengen von vorzugsweise 0,5 bis 1 Gew.-% vorliegt. Bevorzugt enthält die technische Peressigsäure ca. 40 Gew.-% Peressigsäure und ca. 45 Gew.-% Essigsäure, wie sie aus den Vorprodukten in industriell verfügbaren Konzentrationen anfällt.

Beispiele für Basen, die zur Neutralisierung der starken Säure vor der Epoxidierung eingesetzt werden, sind Alkali- und Erdalkalisalze der Essigsäure, Alkali- und Erdalkalicarbonate, Alkali- und Erdalkalihydrogencarbonate, Alkali- und Erdalkalihydroxide. Bevorzugt wird Natriumacetat bei dem erfindungsgemäßen

Verfahren eingesetzt. Die Zugabe der Base erfolgt vorzugsweise in fester Form. Es können aber auch wässrige oder konzentriert wässrige Lösungen der Base eingesetzt werden. Bevorzugt werden 1 bis 2 Gew.-% Natriumacetat zugegeben.

Die gepufferte Peressigsäure wird bei dem erfindungsgemäßen Verfahren vorzugsweise in Mengen von 1,1 bis 1,5 val Peressigsäure pro val zu epoxidierender Doppelbindung eingesetzt.

Als säurebindende Mittel zur Neutralisierung der Essigsäure während der Epoxidierung werden vorzugsweise Alkali- oder Erdalkalicarbonate oder Alkali- oder Erdalkalihydrogencarbonate eingesetzt. Bevorzugt wird Natriumcarbonat oder Natriumhydrogencarbonat eingesetzt. Die Zugabe des säurebindenden Mittels erfolgt vorzugsweise in fester Form.

Vorzugsweise wird das säurebindende Mittel in solchen Mengen zugegeben, daß das Reaktionsgemisch während der Epoxidierung einen pH-Wert von 4 bis 7 aufweist. Bevorzugt wird das säurebindende Mittel in solchen Mengen zugegeben, daß 0,6 bis 0,7 val säurebindendes Mittel pro Mol Gesamtsäure an Peressigsäure und Essigsäure vorliegen.

Als organische Lösungsmittel werden bei dem erfindungsgemäßen Verfahren vorzugsweise aromatische Kohlenwasserstoffe, wie Toluol, Xylol oder Benzol, oder Chlorkohlenwasserstoffe, wie Methylenchlorid, Chloroform, Trichlorethylen oder 1,1,1-Trichlorethan verwendet. Organisches Lösungsmittel wird vorzugsweise in Mengen von 80 bis 160 Gew.-%, bezogen auf das Gesamtgewicht der zur Epoxidierung eingesetzten Organosiliciumverbindung, eingesetzt.

Bei dem erfindungsgemäßen Verfahren wird vorzugsweise die umzusetzende Organosiliciumverbindung, gelöst in organischem Lösungsmittel, vorgelegt, das säurebindende Mittel zugegeben, das Gemisch kräftig gerührt und die gepufferte Peressigsäure zudosiert.

Das erfindungsgemäße Verfahren wird vorzugsweise bei einer Temperatur von 0 °C bis 70 °C, bevorzugt 20 °C bis 50 °C, und beim Druck der umgebenden Atmosphäre, also bei etwa 1020 hPa (abs.) durchgeführt. Bei dem erfindungsgemäßen Verfahren können aber auch höhere oder niedrigere Drücke angewendet werden.

Die Reaktionszeit beträgt bei dem erfindungsgemäßen Verfahren vorzugsweise 2 bis 24 Stunden.

Zur Aufarbeitung des Reaktionsgemisches wird vorzugsweise soviel Wasser zugegeben, wie notwendig ist, um die anorganischen Salze zu lösen. Die Salze, wie auch Essigsäure, werden also vorzugsweise wässrig ausgewaschen und durch Phasentrennung entfernt. Vorzugsweise wird anschließend mit wässriger Lösung von anorganischer Base, wie Natriumhydrogencarbonat, gewaschen, um letzte Säurespuren zu entfernen. Das organische Lösungsmittel wird vorzugsweise destillativ entfernt. Dabei können wasserhaltige Lösungen vorteilhaft im gleichen Verfahrensschritt azeotrop getrocknet werden. Trübungen, durch anorganische Salze verursacht, werden gegebenenfalls durch Filtration beseitigt.

Bei dem erfindungsgemäßen Verfahren werden vorzugsweise als Organosiliciumverbindungen, die SiC-gebundene organische Reste mit mindestens einer Epoxygruppe je Rest enthalten, solche der allgemeinen Formel

$$E_aR_bSi(OR^1)_cO_{\frac{4-(a+b+c)}{2}} \qquad (I),$$

wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten, E gleiche oder verschiedene, einwertige SiC-gebundene organische Reste mit mindestens einer Epoxygruppe je Rest bedeuten,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0
und die Summe $a + b + c \leqq 4$, durchschnittlich 1,0 bis 4,0 ist,
hergestellt.

Die bei dem erfindungsgemäßen Verfahren hergestellten Organosiliciumverbindungen sind bevorzugt Silane oder Organo(poly)siloxane.

Bei dem erfindungsgemäßen Verfahren werden besonders bevorzugt als Organosiliciumverbindungen, die SiC-gebundene organische Reste mit mindestens einer Epoxygruppe je Rest enthalten, Silane der allgemeinen Formel

$ER_dSi(OR^1)_{3-d}$ (II),

wobei R, $R^1$ und E die oben dafür angegebene Bedeutung haben, und d 0, 1 oder 2 ist, oder Organo(poly)siloxane der allgemeinen Formel

$E_eR_{3-e}SiO(SiR_2O)_m(SiREO)_nSiR_{3-e}E_e$ (III) ,

wobei R und E die oben dafür angegebene Bedeutung haben,
e 0 oder 1,
m 0 oder eine ganze Zahl von 1 bis 1000 und
n 0 oder eine ganze Zahl von 1 bis 200 ist,
hergestellt.

Die bei dem erfindungsgemäßen Verfahren hergestellten Organosiliciumverbindungen besitzen vorzugsweise eine Viskosität von 4 bis 10 000 $mm^2 \cdot s^{-1}$ bei 25 °C, bevorzugt 4 bis 2 000 $mm^2 \cdot s^{-1}$ bei 25 °C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Beispiele für Alkylreste $R^1$ sind Methyl-, Ethyl-, n-Propyl-, iso-Propyl-, 1-n-Butyl-, 2-n-Butyl-, iso-Butyl und tert.-Butylrest. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Die Reste E mit mindestens einer Epoxygruppe, also einer Epoxygruppe der Formel

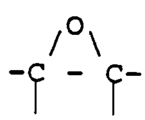 ,

sind vorzugsweise nur aus Kohlenstoff-, Wasserstoff- und Epoxysauerstoffatomen gegebenenfalls neben Ethersauerstoff- oder Carbonylsauerstoffatomen oder neben Ethersauerstoff- und Carbonylsauerstoffatomen aufgebaut.

Die Reste E sind bevorzugt solche der Formel

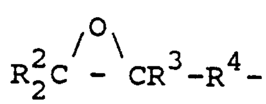 (IV),

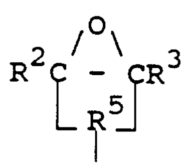 (V) oder

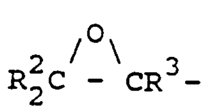 (VI)

wobei $R^2$ gleich oder verschieden ist, ein Wasserstoffatom oder einen einwertigen Kohlenwasserstoffrest mit 1 bis 10 Kohlenstoffatomen je Rest, der durch ein Ethersauerstoffatom substituiert sein kann,
$R^3$ ein Wasserstoffatom oder einen einwertigen Kohlenwasserstoffrest mit 1 bis 10 Kohlenstoffatomen je Rest, der durch mindestens ein Ethersauerstoffatom substituiert sein kann,
$R^4$ einen zweiwertigen Kohlenwasserstoffrest mit 1 bis 12 Kohlenstoffatomen je Rest, der durch mindestens ein Ethersauerstoffatom und/oder durch mindestens eine Carbonylgruppe substituiert sein kann, und
$R^5$ einen dreiwertigen Kohlenwasserstoffrest mit 3 bis 12 Kohlenstoffatomen je Rest bedeutet.

Beispiele für Kohlenwasserstoffreste R mit 1 bis 10 Kohlenstoffatomen je Rest gelten im vollen Umfang für Kohlenwasserstoffreste $R^2$ und $R^3$ mit 1 bis 10 Kohlenstoffatomen je Rest. Vorzugsweise sind die Kohlenwasserstoffreste $R^2$ und $R^3$ Alkylreste mit 1 bis 10 Kohlenstoffatomen je Rest.

Beispiele für zweiwertige Kohlenwasserstoffreste $R^4$ sind lineare oder verzweigte Alkylenreste mit 1 bis 12 Kohlenstoffatomen je Rest, wie der Methylen-, Ethylen-, Butylen- und Octylenrest; Cycloalkylenreste, wie der Ethylencyclohexylenrest; und Arylenreste, wie der Phenylen-, Xenylen- und Tolylenrest.

Beispiele für Reste E der Formel IV sind der 2,3-Epoxy-3-methyl-butylrest, 6,7-Epoxy-7-methyl-octylrest, 3,4-Epoxypentylrest, 4,5-Epoxyhexylrest, 3,4-Epoxy-2,3-dimethyl-butylrest, 6,7-Epoxyoctylrest und 4,5-Epoxy-4,5-dimethyl-hexylrest, wobei bevorzugte Beispiele trialkylsubstituierte Epoxygruppen $E^1$ der Formel

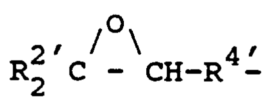 (IV')

sind, worin $R^{2'}$ einen einwertigen Kohlenwasserstoffrest mit 1 bis 10 Kohlenstoffatomen je Rest, bevorzugt einen Alkylrest mit 1 bis 10 Kohlenstoffatomen je Rest, und $R^{4'}$ einen zweiwertigen Kohlenwasserstoffrest mit 1 bis 12 Kohlenstoffatomen je Rest, bevorzugt einen linearen oder verzweigten Alkylenrest mit 1 bis 12 Kohlenstoffatomen je Rest, bedeutet.

Beispiele für Epoxygruppen $E^1$ sind der 2,3-Epoxy-3-methyl-butylrest und der 6,7-Epoxy-7-methyl-octylrest, wobei der 6,7-Epoxy-7-methyl-octylrest bevorzugt ist. Besonders bevorzugt sind Disiloxane mit 6,7-Epoxy-7-methyl-octylresten.

Reste E der Formel V sind vorzugsweise Epoxygruppen enthaltende cyclische, bicyclische oder tricyclische Kohlenwasserstoffreste mit 3 bis 12 Kohlenstoffatomen,
wobei Epoxygruppen enthaltende bicyclische oder tricyclische Kohlenwasserstoffreste $E^2$ der Formel

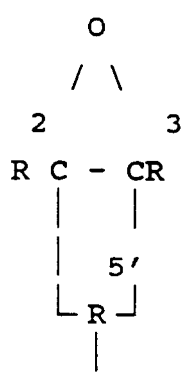 (V')

bevorzugt sind, worin $R^2$ und $R^3$ die oben dafür angegebene Bedeutung haben,
$R^{5'}$ einen dreiwertigen cyclischen oder bicyclischen Kohlenwasserstoffrest mit 4 bis 12 Kohlenstoffatomen je Rest bedeutet, mit der Maßgabe, daß das Siliciumatom direkt an das Ringsystem gebunden ist.

Beispiele für Reste E der Formel V sind Epoxygruppen enthaltende Cycloalkylreste, wie
der 2-(3,4-Epoxycyclohexyl)ethylrest
und der 5,6;9,10-Diepoxycyclododecanylrest;
und Epoxygruppen enthaltende bicyclische oder tricyclische Kohlenwasserstoffreste, wie
der 2-(5,6-Epoxynorbornan-2-yl)ethylrest,
der 5,6-Epoxynorbornan-2-ylrest
und der 3,4-Epoxytricyclo[5.2.1.0$^{2,6}$]decan-8(9)-ylrest (das Ringsystem kann dabei über das $C_8$- oder das

$C_9$-Atom an das Siliciumatom gebunden sein).

Ein bevorzugtes Beispiel für den Rest E der Formel V ist der 5,6-Epoxynorbornan-2-ylrest und der 3,4-Epoxytricyclo[5.2.1.0$^{2,6}$]decan-8(9)-ylrest. Besonders bevorzugt sind Disiloxane mit 5,6-Epoxynorbornan-2-ylresten oder 3,4-Epoxytricyclo[5.2.1.0$^{2,6}$]decan-8(9)-ylresten.

Beispiele für Reste E der Formel VI sind der 1,2-Epoxy-2-propylrest, 1,2-Epoxybutylrest, 1,2-Epoxy-2-methyl-propylrest und 2,3-Epoxy-3-methyl-2-butylrest.

Bei dem erfindungsgemäßen Verfahren werden vorzugsweise als Organosiliciumverbindungen, die SiC-gebundene organische Reste mit mindestens einer Kohlenstoff-Kohlenstoff-Doppelbindung je Rest enthalten, solche der allgemeinen Formel

$$A_fR_gSi(OR^1)_hO_{\frac{4-(f+g+h)}{2}} \qquad (VII) \;,$$

wobei R und $R^1$ die oben dafür angegebene Bedeutung haben, A gleiche oder verschiedene, einwertige SiC-gebundene organische Reste mit mindestens einer Kohlenstoff-Kohlenstoff-Doppelbindung bedeuten,
f 0 oder 1, durchschnittlich 0,01 bis 1,0,
g 0, 1, 2 oder 3, durchschnittlich 0 bis 3,
h 0, 1, 2 oder 3, durchschnittlich 0 bis 3
und die Summe $a + b + c \leqq 4$, durchschnittlich 1,0 bis 4,0 ist, eingesetzt.

Bei dem erfindungsgemäßen Verfahren werden bevorzugt als Organosiliciumverbindungen Silane oder Organo(poly)siloxane eingesetzt.

Bei dem erfindungsgemäßen Verfahren werden besonders bevorzugt als Organosiliciumverbindungen, die SiC-gebundene organische Reste mit mindestens einer Kohlenstoff-Kohlenstoff-Doppelbindung je Rest enthalten, Silane der allgemeinen Formel

$AR_kSi(OR^1)_{3-k}$ (VIII) ,

wobei R, $R^1$ und A die oben dafür angegebene Bedeutung haben und k 0, 1 oder 2 ist,
oder Organo(poly)siloxane der allgemeinen Formel

$A_lR_{3-l}SiO(SiR_2O)_o(SiRAO)_pSiR_{3-l}A_l$ (IX) ,

wobei R und A die oben dafür angegebene Bedeutung haben,
1 0 oder 1,
o 0 oder eine ganze Zahl von 1 bis 1000 und
p 0 oder eine ganze Zahl von 1 bis 200 ist,
eingesetzt.

Die Reste A sind bevorzugt solche der Formel

$R^2_2C = CR^3\text{-}R^4\text{-}$ (X),

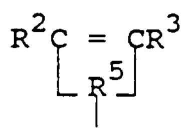

(XI)

oder

$R^2_2C = CR^3\text{-}$ (XII)

wobei $R^2$, $R^3$, $R^4$ und $R^5$ die oben dafür angegebene Bedeutung haben.

Beispiele für Reste A der Formel X sind trialkylsubstituierte Doppelbindung enthaltende Reste, wie der 3-Methyl-2-butenylrest und der 7-Methyl-6-octenylrest; dialkylsubstituierte Doppelbindungen enthaltende

Reste, wie der 3-Pentenylrest und der 2,3-Dimethyl-3-butenylrest; und endständige Doppelbindung enthaltende Reste, wie der 5-Hexenylrest und der 9-Decenylrest.

Beispiele für Reste A der Formel XI sind Doppelbindungen enthaltende cyclische, bicyclische und tricyclische Kohlenwasserstoffreste, wie Cyclohexenylethylreste und Norbornenylreste.

Beispiele für Reste A der Formel XII sind der Propen-2-yl-rest, der 1-Butenylrest und der 2-Methyl-1-propenylrest.

Bezüglich der Reaktionsgeschwindigkeit bei der Epoxidierung nach dem erfindungsgemäßen Verfahren hat sich gezeigt, daß trialkylsubstituierte Doppelbindungen schneller als dialkylsubstituierte Doppelbindungen und diese wiederum schneller als endständige Doppelbindungen epoxidiert werden. Weiterhin hat sich gezeigt, daß bei gleichem olefinischen Rest A Silane oder Disiloxane schneller reagieren als Organo(poly)-siloxane, aber Epoxygruppen aufweisende Organo(poly)siloxane trotzdem in hohen Ausbeuten erhalten werden.

Die Organosiliciumverbindungen, die SiC-gebundene organische Reste mit mindestens einer Kohlenstoff-Kohlenstoff-Doppelbindung je Rest enthalten, werden hergestellt durch Anlagerung von Dienen an Organosiliciumverbindungen mit Sigebundenen Wasserstoffatomen in Gegenwart von Hydrosilylierungskatalysatoren, wie Platinverbindungen oder Platinkomplexen. Da bei der Hydrosilylierung $\alpha$-Olefine leichter reagieren als cyclische bzw. dialkyl- oder trialkylsubstituierte Olefine, erfolgt die Hydrosilylierung mit der gewünschten Selektivität. Vinylcyclohexen wird also an der exocyclischen Doppelbindung hydrosilyliert, während die übrigbleibende cyclische Doppelbindung gut mit Peressigsäure reagiert. Bei 7-Methyl-1,6-octadien wird glatte Hydrosilylierung an der endständigen Doppelbindung (1-Stellung) und eine sehr schnelle Epoxidierung an der trialkylsubstituierten Doppelbindung (6-Stellung) erzielt.

Aus den bei dem erfindungsgemäßen Verfahren hergestellten, Epoxygruppen aufweisenden Organosiliciumverbindungen, die Alkoxygruppen enthalten, können durch Kondensation höhere Polymere hergestellt werden.

Die bei dem erfindungsgemäßen Verfahren hergestellten, Epoxygruppen aufweisenden Organo(poly)-siloxane können mit Organopolysiloxanen equilibriert werden.

Als Organopolysiloxane, mit denen die Epoxygruppen aufweisenden Organopolysiloxane equilibriert werden können, werden vorzugsweise solche ausgewählt aus der Gruppe bestehend aus linearen, endständige Triorganosiloxygruppen aufweisenden Organopolysiloxanen der Formel

$$R_3SiO(SiR_2O)_rSiR_3 ,$$

wobei R die oben dafür angegebene Bedeutung hat und r 0 oder eine ganze Zahl im Wert von 1 bis 1500 ist, linearen, endständige Hydroxylgruppen aufweisenden Organopolysiloxanen der Formel

$$HO(SiR_2O)_sH ,$$

wobei R die oben dafür angegebene Bedeutung hat und s eine ganze Zahl im Wert von 1 bis 1500 ist, cyclischen Organopolysiloxanen der Formel

$$(R_2SiO)_t ,$$

wobei R die oben dafür angegebene Bedeutung hat und t eine ganze Zahl von 3 bis 12 ist,
und Mischpolymerisaten aus Einheiten der Formel

$$R_2SiO \text{ und } RSiO_{3/2} ,$$

wobei R die oben dafür angegebene Bedeutung hat, eingesetzt.

Das Mengenverhältnis des bei der gegebenenfalls durchgeführten Equilibrierung eingesetzten Organopolysiloxans und Epoxygruppen aufweisenden Organo(poly)siloxans wird lediglich durch den gewünschten Anteil der Epoxygruppen in den bei der gegebenenfalls durchgeführten Equilibrierung erzeugten Organopolysiloxanen und durch die gewünschte mittlere Kettenlänge bestimmt.

Bei dem gegebenenfalls durchgeführten Equilibrieren werden vorzugsweise basische Katalysatoren, welche die Equilibrierung fördern, eingesetzt. Beispiele für solche Katalysatoren sind Alkalihydroxide, wie Natriumhydroxid und Kaliumhydroxid, Trimethylbenzylammoniumhydroxid und Tetramethylammoniumhydroxid. Bevorzugt ist Tetramethylammoniumhydroxid. Basische Katalysatoren werden vorzugsweise in Mengen von 50 bis 10 000 Gew.-ppm (= Teile je Million), bevorzugt 200 bis 1 000 Gew.-ppm, jeweils bezogen auf das Gesamtgewicht der eingesetzten Organopolysiloxane, verwendet.

Die gegebenenfalls durchgeführte Equilibrierung wird vorzugsweise bei 100 °C bis 150 °C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird gegebenenfalls in 5 bis 20 Gew.-%, bezogen auf das Gesamtgewicht der eingesetzten Organopolysiloxane, mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die nach dem erfindungsgemäßen Verfahren hergestellten, Epoxygruppen aufweisenden Organo(poly)-siloxane können zur Imprägnierung von Fasern, also zur Textilausrüstung, verwendet werden und sind kationisch polymerisierbar.

Beispiel 1:

175 g (0,50 Mol) des Additionsprodukts aus einem Mol 1,1,3,3-Tetramethyldisiloxan und zwei Mol 4-Vinylcyclohexen, 1,3-Bis[2-(3-Cyclohexenyl)ethyl]-1,1,3,3-tetramethyldisiloxan, werden in 450 g Trichlorethylen gelöst und es werden 168 g Natriumcarbonat zugesetzt. Zu dem Gemisch werden unter Kühlung innerhalb von einer Stunde 240 g technische Peressigsäure (entsprechend 19,2 g Aktivsauerstoff), in der kurz vor der Zugabe 4 g Natriumacetat gelöst wurden, zugetropft und das Reaktionsgemisch wird für weitere 6 Stunden auf 35 °C bis 40 °C erwärmt. Die nicht gelösten Salze werden in 300 ml Wasser gelöst und die Wasserphase wird abgetrennt. Die Epoxidlösung wird zweimal mit je 100 ml verdünnter (ca. 2 %iger) Natriumhydrogencarbonatlösung gewaschen und dann bei 100 °C und 1020 hPa (abs.) und anschließend bei 100 °C und 5 hPa (abs.) einkonzentriert. Es werden 187 g (98 % der Theorie) eines farblosen Öls mit einer Viskosität von 38 $mm^2 \cdot s^{-1}$ bei 25 °C erhalten. Das $^1H$-NMR-Spektrum des Produkts 1,3-Bis[2-(3,4-epoxycyclohexyl)ethyl]-1,1,3,3-tetramethyldisiloxan ergibt einen Epoxidgehalt von über 96 %, bezogen auf die eingesetzte olefinische Doppelbindung. Das Produkt hat ein Epoxyequivalentgewicht von 197.

Beispiel 2:

Zu einem Gemisch aus 95,5 g (0,25 Mol) 1,3-Bis(7-methyl-6-octenyl)-1,1,3,3-tetramethyldisiloxan, das durch Addition von 7-Methyl-1,6-octadien an 1,1,3,3-Tetramethyldisiloxan hergestellt wurde, 200 g Toluol und 84 g Natriumhydrogencarbonat werden unter Rühren und Kühlung bei 25 °C bis 30 °C innerhalb einer Stunde 122 g technische Peressigsäure (entsprechend 9,6 g Aktivsauerstoff), die 1,67 Gew.-% Natriumacetat enthält, zugetropft. Es wird bei gleicher Temperatur weitere 4 Stunden gerührt. Die nicht gelösten Salze werden in 150 ml Wasser gelöst und die Wasserphase wird abgetrennt. Die Toluollösung wird zweimal mit je 50 ml verdünnter (ca. 2 %iger) Natriumhydrogencarbonatlösung gewaschen. Das Toluol wird abdestilliert und von dem Rückstand werden bei 80 °C und 5 hPa (abs.) die Lösungsmittelreste destillativ entfernt. Es werden 103 g (99 % der Theorie) einer klaren, farblosen Flüssigkeit mit einer Viskosität von 13 $mm^2 \cdot s^{-1}$ bei 25 °C erhalten. Das Produkt, 1,3-Bis(6,7-epoxy-7-methyloctyl)-1,1,3,3-tetramethyldisiloxan, enthält gemäß dem $^1H$-NMR-Spektrum weniger als 1 % der eingesetzten Doppelbindungsmenge. Das Produkt hat ein Epoxidequivalentgewicht von 209.

Beispiel 3:

Zusammen mit 600 g Toluol und 252 g Natriumbicarbonat werden 272 g eines olefinisch ungesättigten Copolymerisats aus Trimethylsiloxan- und 2-(3-Cyclohexenyl)ethylmethylsiloxaneinheiten mit einer Jodzahl von 127 und einer Viskosität von 133 $mm^2/s$ bei 25 °C vorgelegt. Zu dieser Mischung tropft man unter gutem Rühren bei 35 - 40 °C in etwa 1 Stunde 360 g Peressigsäure, die 29 g Aktivsauerstoff enthält, und der zuvor 6 g Natriumacetat zugemischt wurde. Nach weiteren 18 Stunden bei gleicher Temperatur löst man das entstandene NaOAc mit 350 ml Wasser auf und wäscht die organische Phase mit 150 ml 7 %iger Natriumbicarbonatlösung. Das noch enthaltene Wasser kreist man unter leichtem Vakuum bei ca. 45 °C aus und entfernt dann das Toluol bei 80 °C und 5 hPa (abs.). Man erhält 236 g klares, farbloses Siliconöl mit der Viskosität von 840 $mm^2/s$ bei 25 °C. Der Vergleich der Signale von restlichen -CH = CH-Protonen bei 5,6 ppm mit entstandenen

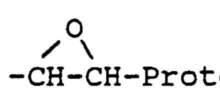
Protonen

bei 3,1 ppm im $^1$H-NMR-Spektrum zeigt einen Umsatz von 90 % der Theorie. Das Produkt, ein Organopolysiloxan aus Trimethylsiloxan- und 2-(3,4-Epoxycyclohexyl)-ethyl-methylsiloxaneinheiten hat ein Epoxydequivalentgewicht von 238. Die Hydroxylzahl von 0,15 zeigt, daß weniger als 0,1 Mol% aller entstandenen Epoxygruppen hydrolytisch geöffnet sind.

Beispiel 4:

Die Arbeitsweise von Beispiel 2 wird wiederholt mit der Abänderung, daß 70,0 g (0,25 Mol) des 96,5 %igen (3,5 % Stereoisomere) 1,3-Bis(3-methyl-2-butenyl)-1,1,3,3-tetramethyldisiloxans mit allylischer C=C-Doppelbindung anstelle von 95,5 g (0,25 Mol) 1,3-Bis(7-methyl-6-octenyl)-1,1,3,3-tetramethyldisiloxan eingesetzt werden. Es werden 74,5 g 1,3-Bis(2,3-epoxy-3-methylbutyl)-1,1,3,3-tetramethyldisiloxan als farblose, klare Flüssigkeit mit einer Viskosität von 4,2 $mm^2 \cdot s^{-1}$ bei 25 °C erhalten. Gemäß dem $^1$H-NMR-Spektrum haben sich 94 % der olefinischen Doppelbindungen zum Epoxid umgesetzt. Produkte entsprechend einer sauren hydrolytischen Ringöffnung oder eine Abspaltung von allylischen Seitenketten wurden nicht beobachtet. Das Produkt hat ein Epoxidequivalentgewicht von 162.

Beispiel 5:

64 g (0,20 Mol) 1,3-Bis(5-norbornen-2-yl)-1,1,3,3-tetramethyldisiloxan,das durch Addition von Norbornadien an 1,1,3,3-Tetramethyldisiloxan hergestellt wurde, werden mit 150 g Toluol und 84 g Natriumhydrogencarbonat gemischt. Zu dem Gemisch werden unter Rühren bei 30 °C innerhalb einer Stunde 122 g technische Peressigsäure (entsprechend 9,6 g Aktivsauerstoff), die 1,67 Gew.-% Natriumacetat enthält, zugetropft. Es wird weitere 6 Stunden bei 30 °C gerührt. Die nicht gelösten Salze werden in 150 ml Wasser gelöst und die Wasserphase wird abgetrennt. Die Toluollösung wird zweimal mit je 50 ml verdünnter (ca. 2 %iger) Natriumhydrogencarbonatlösung gewaschen. Das Toluol wird bei 80 °C und 5 hPa (abs.) destillativ entfernt. Es werden 66 g 1,3-Bis(5,6-epoxynorbornan-2-yl)-1,1,3,3-tetramethyldisiloxan als farbloses Öl mit einer Viskosität von 104 $mm^2 \cdot s^{-1}$ bei 25 °C erhalten. Das $^1$H-NMR-Spektrum weist keine olefinischen Protonen (Nachweisgrenze ca. 1 %) auf. Das Produkt hat ein Epoxidequivalentgewicht von 176.

Beispiel 6:

Die Arbeitsweise von Beispiel 2 wird wiederholt mit der Abänderung, daß 144 g (0,50 Mol) 7-Methyl-6-octenyltriethoxysilan anstelle von 95,5 g (0,25 Mol) 1,3-Bis(7-Methyl-6-octenyl)-1,1,3,3-tetramethyldisiloxan eingesetzt werden. Es werden 125 g 6,7-Epoxy-7-methyloctyltriethoxysilan, das eine Viskosität von 4 $mm^2 \cdot s^{-1}$ bei 25 °C besitzt, erhalten. Das $^1$H-NMR-Spektrum zeigt einen Umsatz von mehr als 95 %, wobei die Ethoxygruppen am Silan erhalten bleiben. Das Silan hat ein Epoxidequivalentgewicht von 316.

Beispiel 7:

99 g (0,25 Mol) 1,3-Bis[2-(3,4-epoxycyclohexyl)ethyl]-1,1,3,3-tetramethyldisiloxan mit einem Epoxidequivalentgewicht von 197, dessen Herstellung in Beispiel 1 beschrieben ist, werden zusammen mit 962 g (2,6 Mol) Decamethylcyclopentasiloxan unter Rühren und unter Stickstoffatmosphäre auf 80 °C erwärmt. Zu der Mischung werden dann 3,9 ml einer 25 %igen Lösung von Tetramethylammoniumhydroxid in Methanol zugegeben. Es wird 3 Stunden bei 80 °C gerührt und dann zur Desaktivierung des Katalysators eine Stunde bei 150 °C gerührt. Die flüchtigen Bestandteile werden anschließend bei 150 °C und 5 hPa (abs.) destillativ entfernt und der Rückstand filtriert. Es wird ein klares, farbloses Öl mit einer Viskosität von 120 $mm^2 \cdot s^{-1}$ bei 25 °C und einen Epoxidequivalentgewicht von 2000 erhalten.

Beispiel 8:

69 g des Organopolysiloxans aus Trimethylsiloxan-, Dimethylsiloxan- und 2-(3,4-Epoxycyclohexyl)ethylmethylsiloxaneinheiten mit einem Epoxidequivalentgewicht von 580, dessen Herstellung in Beispiel 3 beschrieben ist, werden mit 500 g (1,35 Mol) Decamethylcyclopentasiloxan gemischt und die Mischung wird unter Rühren und unter Stickstoffatmosphäre auf 80 °C erwärmt. Zu der Mischung werden bei 80 °C 2,1 ml einer 25 %igen Lösung von Tetramethylammoniumhydroxid in Methanol gegeben und die Mischung wird bei 110 °C 3 Stunden gerührt. Dann werden erneut 1,0 ml einer 25 %igen Lösung von Tetramethylammoniumhydroxid in Methanol zugegeben und es wird 3 Stunden bei 110 °C gerührt. Zur Desaktivierung des Katalysators wird die Reaktionsmischung anschließend eine Stunde bei 150 °C gerührt. Die flüchtigen

Bestandteile werden bei 150 °C und 5 hPa (abs.) destillativ entfernt und der Rückstand filtriert. Es wird ein klares, farbloses Öl mit einer Viskosität von 5 100 $mm^2 \cdot s^{-1}$ bei 25 °C und einem Epoxidequivalentgewicht von 3 840 erhalten.

Beispiel 9:

402 g eines olefinisch ungesättigten Copolymerisats aus Trimethylsiloxan-, Dimethylsiloxan- und (7-Methyl-6-octenyl)methylsiloxaneinheiten mit der Jodzahl 59,8 und einer Viskosität von 117 $mm^2/s$ bei 25 °C werden mit 420 g Toluol und 176 g Natriumbicarbonat gut vermischt. Bei 35 - 40 °C werden in 1,5 Stunden 252 g technische Peressigsäure (entsprechend 20 g Aktivsauerstoff) gemischt mit 4,2 g Natriumacetat zudosiert. Man läßt über Nacht ausreagieren und setzt dann 245 g Wasser zu. Nach Phasentrennung wäscht man die Toluolphase mit 105 g 7 %iger $NaHCO_3$-Lösung und kreist das noch enthaltene Wasser bei 45 °C und leichtem Vakuum aus. Nach Einkonzentrieren bei 80 °C und 5 hPa und Filtration erhält man 363 g eines klaren, farblosen Öls der Viskosität 175 $mm^2/s$ bei 25 °C. Aus dem $^1H$-NMR-Spektrum ist anhand der Integrale für das olefinische Proton des Ausgangsmaterials und für das epoxidgebundene Proton des Produkts ein Umsatz von 91 % der Theorie zu entnehmen. Das gewonnene Organopolysiloxan aus Trimethylsiloxan-, Dimethylsiloxan- und (7-Methyl-6,7-epoxyoctyl)-methylsiloxaneinheiten hat ein Epoxidequivalentgewicht von 483 bei einer hydrolytischen Ringöffnungsquote von weniger als 0,2 Mol%.

## Patentansprüche

## Patentansprüche für folgende Vertragsstaaten : AT, BE, CH, LI, DE, FR, GB, IT, NL

1. Verfahren zur Herstellung von Organosiliciumverbindungen, die SiC-gebundene organische Reste mit mindestens einer Epoxygruppe je Rest enthalten, durch Epoxidierung von Organosiliciumverbindungen, die SiC-gebundene organische Reste mit mindestens einer Kohlenstoff-Kohlenstoff-Doppelbindung je Rest enthalten, mit Peressigsäure, die Essigsäure und katalytische Mengen an starker Säure enthält, in Gegenwart von organischen Lösungsmitteln und säurebindenden Mitteln dadurch gekennzeichnet, daß die starke Säure vor der Epoxidierung mit Peressigsäure mit einer mindestens äquivalenten Menge einer Base gebunden wird und während der Epoxidierung 0,4 bis 0,8 val säurebindende Mittel pro Mol Gesamtsäure an Peressigsäure und Essigsäure vorliegen.

2. Verfahren nach Anspruch 1, dadurch gekennzeichnet, daß Organosiliciumverbindungen, die SiC-gebundene organische Reste mit mindestens einer Epoxygruppe je Rest enthalten, solche der allgemeinen Formel

$$E_aR_bSi(OR^1)_cO_{\frac{4-(a+b+c)}{2}} \qquad (I)$$

sind, wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
E gleiche oder verschiedene, einwertige SiC-gebundene organische Reste mit mindestens einer Epoxygruppe je Rest bedeuten,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0
und die Summe $a + b + c \leqq 4$, durchschnittlich 1,0 bis 4,0 ist.

3. Verfahren nach Anspruch 1 oder 2, dadurch gekennzeichnet, daß die Organosiliciumverbindungen, die SiC-gebundene organische Reste mit mindestens einer Epoxygruppe je Rest enthalten, Silane der allgemeinen Formel

$$ER_dSi(OR^1)_{3-d} \qquad (II)$$

sind, wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
E ein einwertiger SiC-gebundener organischer Rest mit mindestens einer Epoxygruppe je Rest und
d 0, 1 oder 2 ist.

**4.** Verfahren nach Anspruch 1 oder 2, dadurch gekennzeichnet, daß die Organosiliciumverbindungen, die SiC-gebundene organische Reste mit mindestens einer Epoxygruppe je Rest enthalten, Organopolysiloxane der allgemeinen Formel

$E_eR_{3-e}SiO(SiR_2O)_m(SiREO)_nSiR_{3-e}E_e$ (III)

sind, wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
E gleiche oder verschiedene, einwertige SiC-gebundene organische Reste mit mindestens einer Epoxygruppe je Rest bedeuten,
e 0 oder 1,
m 0 oder eine ganze Zahl von 1 bis 1000 und
n 0 oder eine ganze Zahl von 1 bis 200 ist.

**5.** Verfahren nach einem der Ansprüche 1 bis 4, dadurch gekennzeichnet, daß E ein Rest der Formel

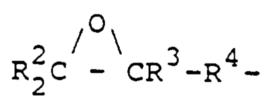
(IV),

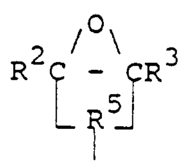
(V) oder

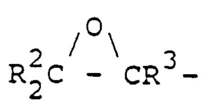
(VI)

ist, wobei $R^2$ gleich oder verschieden ist, ein Wasserstoffatom oder einen einwertigen Kohlenwasserstoffrest mit 1 bis 10 Kohlenstoffatomen je Rest, der durch mindestens ein Ethersauerstoffatom substituiert sein kann,
$R^3$ ein Wasserstoffatom oder einen einwertigen Kohlenwasserstoffrest mit 1 bis 10 Kohlenstoffatomen je Rest, der durch mindestens ein Ethersauerstoffatom substituiert sein kann,
$R^4$ einen zweiwertigen Kohlenwasserstoffrest mit 1 bis 12 Kohlenstoffatomen je Rest, der durch mindestens ein Ethersauerstoffatom und/oder durch mindestens eine Carbonylgruppe substituiert sein kann und
$R^5$ einen dreiwertigen Kohlenwasserstoffrest mit 3 bis 12 Kohlenstoffatomen je Rest bedeutet.

**6.** Verfahren nach einem der Ansprüche 1 bis 5, dadurch gekennzeichnet, daß als säurebindende Mittel Alkalicarbonate oder Alkalihydrogencarbonate verwendet werden.

**7.** Verfahren nach einem der Ansprüche 1 bis 6, dadurch gekennzeichnet, daß als Lösungsmittel Chlorkohlenwasserstoffe oder aromatische Kohlenwasserstoffe verwendet werden.

**8.** Verwendung der durch das Verfahren nach Anspruch 1 oder 2 oder einem der Ansprüche 4 bis 7 erhaltenen Organopolysiloxane, dadurch gekennzeichnet, daß die so erhaltenen Organopolysiloxane, die SiC-gebundene organische Reste mit mindestens einer Epoxygruppe je Rest enthalten, zur Equilibrierung mit Organopolysiloxanen ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten verwendet werden.

**9.** Organosiliciumverbindungen, die SiC-gebundene organische Reste mit mindestens einer Epoxygruppe je Rest enthalten, der allgemeinen Formel

$$E^1_aR_bSi(OR^1)_cO_{\frac{4-(a+b+c)}{2}} \qquad (I'),$$

wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
$E^1$ ein 6,7-Epoxy-7-methyloctylrest bedeutet,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0
und die Summe $a + b + c \leqq 4$, durchschnittlich 1,0 bis 4,0 ist.

**10.** Organosiliciumverbindungen, die SiC-gebundene organische Reste mit mindestens einer Epoxygruppe je Rest enthalten, der allgemeinen Formel

$$E^2_aR_bSi(OR^1)_cO_{\frac{4-(a+b+c)}{2}} \qquad (I''),$$

wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
$E^2$ einen SiC-gebundenen Rest der Formel

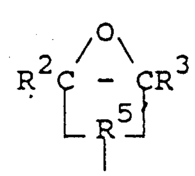 (V')

bedeutet, worin $R^2$ ein Wasserstoffatom oder einen einwertigen Kohlenwasserstoffrest mit 1 bis 10 Kohlenstoffatomen je Rest, der durch mindestens ein Ethersauerstoffatom substituiert sein kann, $R^3$ ein Wasserstoffatom oder einen einwertigen Kohlenwasserstoffrest mit 1 bis 10 Kohlenstoffatomen je Rest, der durch mindestens ein Ethersauerstoffatom substituiert sein kann und
$R^{5'}$ einen dreiwertigen cyclischen oder bicyclischen Kohlenwasserstoffrest mit 4 bis 12 Kohlenstoffatomen je Rest bedeutet, mit der Maßgabe, daß das Siliciumatom direkt an das Ringsystem gebunden ist,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0

und die Summe $a + b + c \leqq 4$, durchschnittlich 1,0 bis 4,0 ist.

**11.** Organosiliciumverbindungen nach Anspruch 10, dadurch gekennzeichnet, daß sie Disiloxane der allgemeinen Formel

$E^2R_2SiOSiR_2E^2$ (III')

sind, wobei $E^2$ ein 5,6-Epoxynorbornan-2-ylrest oder ein 3,4-Epoxytricyclo[5.2.1.$0^{2,6}$]decan-8(9)-ylrest bedeutet und R gleiche oder verschiedene, gegebenenfalls halogenierte Kohlenwasserstoffreste mit 1 bis 18 Kohlenstoffatomen je Rest bedeuten.

**Patentansprüche für folgenden Vertragsstaat : ES**

**1.** Verfahren zur Herstellung von Organosiliciumverbindungen, die SiC-gebundene organische Reste mit mindestens einer Epoxygruppe je Rest enthalten, durch Epoxidierung von Organosiliciumverbindungen, die SiC-gebundene organische Reste mit mindestens einer Kohlenstoff-Kohlenstoff-Doppelbindung je Rest enthalten, mit Peressigsäure, die Essigsäure und katalytische Mengen an starker Säure enthält, in Gegenwart von organischen Lösungsmitteln und säurebindenden Mitteln dadurch gekennzeichnet, daß die starke Säure vor der Epoxidierung mit Peressigsäure mit einer mindestens äquivalenten Menge einer Base gebunden wird und während der Epoxidierung 0,4 bis 0,8 val säurebindende Mittel pro Mol Gesamtsäure an Peressigsäure und Essigsäure vorliegen.

**2.** Verfahren nach Anspruch 1, dadurch gekennzeichnet, daß Organosiliciumverbindungen, die SiC-gebundene organische Reste mit mindestens einer Epoxygruppe je Rest enthalten, solche der allgemeinen Formel

$$E_aR_bSi(OR^1)_cO_{\frac{4-(a+b+c)}{2}} \quad (I)$$

sind, wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
E gleiche oder verschiedene, einwertige SiC-gebundene organische Reste mit mindestens einer Epoxygruppe je Rest bedeuten,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0
und die Summe $a + b + c \leqq 4$, durchschnittlich 1,0 bis 4,0 ist.

**3.** Verfahren nach Anspruch 1 oder 2, dadurch gekennzeichnet, daß die Organosiliciumverbindungen, die SiC-gebundene organische Reste mit mindestens einer Epoxygruppe je Rest enthalten, Silane der allgemeinen Formel

$ER_dSi(OR^1)_{3-d}$ (II)

sind, wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
E ein einwertiger SiC-gebundener organischer Rest mit mindestens einer Epoxygruppe je Rest und
d 0, 1 oder 2 ist.

**4.** Verfahren nach Anspruch 1 oder 2, dadurch gekennzeichnet, daß die Organosiliciumverbindungen, die SiC-gebundene organische Reste mit mindestens einer Epoxygruppe je Rest enthalten, Organopolysilo-

xane der allgemeinen Formel

$E_eR_{3-e}SiO(SiR_2O)_m(SiREO)_nSiR_{3-e}E_e$ (III)

sind, wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
E gleiche oder verschiedene, einwertige SiC-gebundene organische Reste mit mindestens einer Epoxygruppe je Rest bedeuten,
e 0 oder 1,
m 0 oder eine ganze Zahl von 1 bis 1000 und
n 0 oder eine ganze Zahl von 1 bis 200 ist.

**5.** Verfahren nach einem der Ansprüche 1 bis 4, dadurch gekennzeichnet, daß E ein Rest der Formel

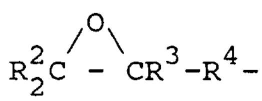 (IV),

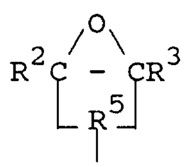 (V) oder

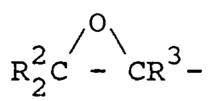 (VI)

ist, wobei $R^2$ gleich oder verschieden ist, ein Wasserstoffatom oder einen einwertigen Kohlenwasserstoffrest mit 1 bis 10 Kohlenstoffatomen je Rest, der durch mindestens ein Ethersauerstoffatom substituiert sein kann,
$R^3$ ein Wasserstoffatom oder einen einwertigen Kohlenwasserstoffrest mit 1 bis 10 Kohlenstoffatomen je Rest, der durch mindestens ein Ethersauerstoffatom substituiert sein kann,
$R^4$ einen zweiwertigen Kohlenwasserstoffrest mit 1 bis 12 Kohlenstoffatomen je Rest, der durch mindestens ein Ethersauerstoffatom und/oder durch mindestens eine Carbonylgruppe substituiert sein kann und
$R^5$ einen dreiwertigen Kohlenwasserstoffrest mit 3 bis 12 Kohlenstoffatomen je Rest bedeutet.

**6.** Verfahren nach einem der Ansprüche 1 bis 5, dadurch gekennzeichnet, daß als säurebindende Mittel Alkalicarbonate oder Alkalihydrogencarbonate verwendet werden.

**7.** Verfahren nach einem der Ansprüche 1 bis 6, dadurch gekennzeichnet, daß als Lösungsmittel Chlorkohlenwasserstoffe oder aromatische Kohlenwasserstoffe verwendet werden.

**8.** Verwendung der durch das Verfahren nach Anspruch 1 oder 2 oder einem der Ansprüche 4 bis 7 erhaltenen Organopolysiloxane, dadurch gekennzeichnet, daß die so erhaltenen Organopolysiloxane, die SiC-gebundene organische Reste mit mindestens einer Epoxygruppe je Rest enthalten, zur Equilibrierung mit Organopolysiloxanen ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten verwendet werden.

**9.** Verfahren zur Herstellung von Organosiliciumverbindungen, die SiC-gebundene organische Reste mit mindestens einer Epoxygruppe je Rest enthalten, der allgemeinen Formel

$$E^1_a R_b Si(OR^1)_c O_{\frac{4-(a+b+c)}{2}} \quad (I'),$$

wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
$E^1$ ein 6,7-Epoxy-7-methyloctylrest bedeutet,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0 und die Summe $a+b+c \leqq 4$, durchschnittlich 1,0 bis 4,0 ist, durch Epoxidierung von geeigneten Organosiliciumverbindungen, die SiC-gebundene organische Reste mit mindestens einer Kohlenstoff-Kohlenstoff-Doppelbindung je Rest enthalten, mit Peressigsäure, die Essigsäure und katalytische Mengen an starker Säure enthält, in Gegenwart von organischen Lösungsmitteln und säurebindenden Mitteln, wobei die starke Säure vor der Epoxidierung mit Peressigsäure mit einer mindestens äquivalenten Menge einer Base gebunden wird und während der Epoxidierung 0,4 bis 0,8 val säurebindende Mittel pro Mol Gesamtsäure an Peressigsäure und Essigsäure vorliegen.

**10.** Verfahren zur Herstellung von Organosiliciumverbindungen, die SiC-gebundene organische Reste mit mindestens einer Epoxygruppe je Rest enthalten, der allgemeinen Formel

$$E^2_a R_b Si(OR^1)_c O_{\frac{4-(a+b+c)}{2}} \quad (I''),$$

wobei R gleiche oder verschiedene, gegebenenfalls halogenierte Kohlenwasserstoffreste mit 1 bis 18 Kohlenstoffatomen je Rest bedeuten,
$R^1$ gleiche oder verschiedene, einwertige Kohlenwasserstoffreste mit 1 bis 8 Kohlenstoffatomen je Rest, die durch ein Ethersauerstoffatom substituiert sein können, bedeuten,
$E^2$ einen SiC-gebundenen Rest der Formel

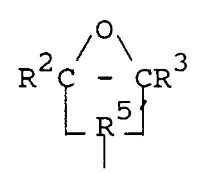

(V')

bedeutet, worin $R^2$ ein Wasserstoffatom oder einen einwertigen Kohlenwasserstoffrest mit 1 bis 10 Kohlenstoffatomen je Rest, der durch mindestens ein Ethersauerstoffatom substituiert sein kann,
$R^3$ ein Wasserstoffatom oder einen einwertigen Kohlenwasserstoffrest mit 1 bis 10 Kohlenstoffatomen je Rest, der durch mindestens ein Ethersauerstoffatom substituiert sein kann und
$R^{5'}$ einen dreiwertigen cyclischen oder bicyclischen Kohlenwasserstoffrest mit 4 bis 12 Kohlenstoffatomen je Rest bedeutet, mit der Maßgabe, daß das Siliciumatom direkt an das Ringsystem gebunden ist,
a 0 oder 1, durchschnittlich 0,01 bis 1,0
b 0, 1, 2 oder 3, durchschnittlich 0,0 bis 3,0
c 0, 1, 2 oder 3, durchschnittlich 0,0 bis 3,0 und die Summe $a+b+c \leqq 4$, durchschnittlich 1,0 bis 4,0 ist, durch Epoxidierung von geeigneten Organosiliciumverbindungen, die SiC-gebundene organische Reste mit mindestens einer Kohlenstoff-Kohlenstoff-Doppelbindung je Rest enthalten, mit Peressigsäure, die Essigsäure und katalytische Mengen an starker Säure enthält, in Gegenwart von organischen Lösungsmitteln und säurebindenden Mitteln, wobei die starke Säure vor der Epoxidierung mit Peressigsäure mit einer mindestens äquivalenten Menge einer Base gebunden wird und während der Epoxidierung 0,4 bis 0,8 val säurebindende Mittel pro Mol Gesamtsäure an Peressigsäure und Essigsäure vorliegen.

**11.** Verfahren nach Anspruch 10 zur Herstellung von Organosiliciumverbindungen, die Disiloxane der allgemeinen Formel

$E^2R_2SiOSiR_2E^2$ (III')

sind, wobei $E^2$ ein 5,6-Epoxynorbornan-2-ylrest oder ein 3,4-Epoxytricyclo[5.2.1.0$^{2,6}$]decan-8(9)-ylrest bedeutet und R gleiche oder verschiedene, gegebenenfalls halogenierte Kohlenwasserstoffreste mit 1 bis 18 Kohlenstoffatomen je Rest bedeuten, durch Epoxidierung von geeigneten Organosiliciumverbindungen, die SiC-gebundene organische Reste mit mindestens einer Kohlenstoff-Kohlenstoff-Doppelbindung je Rest enthalten, mit Peressigsäure, die Essigsäure und katalytische Mengen an starker Säure enthält, in Gegenwart von organischen Lösungsmitteln und säurebindenden Mitteln, wobei die starke Säure vor der Epoxidierung mit Peressigsäure mit einer mindestens äquivalenten Menge einer Base gebunden wird und während der Epoxidierung 0,4 bis 0,8 val säurebindende Mittel pro Mol Gesamtsäure an Peressigsäure und Essigsäure vorliegen.

## Claims

### Claims for the following Contracting States : AT, BE, CH, LI, DE, FR, GB, IT, NL

**1.** Process for the preparation of organosilicon compounds which contain SiC-bonded organic radicals having at least one epoxy group per radical by epoxidation of organosilicon compounds which contain SiC-bonded organic radicals having at least one carbon-carbon double bond per radical with peracetic acid which contains acetic acid and catalytic amounts of a strong acid, in the presence of organic solvents and acid-binding agents, characterized in that the strong acid is bonded with at least an equivalent amount of a base before the epoxidation with peracetic acid, and 0.4 to 0.8 equivalent of acid-binding agents per mol of total acid comprising peracetic acid and acetic acid is employed during the epoxidation.

**2.** Process according to Claim 1, characterized in that organosilicon compounds which contain SiC-bonded organic radicals having at least one epoxy group per radical are those of the general formula

$$E_aR_bSi(OR^1)_cO_{\frac{4-(a+b+c)}{2}} \qquad (I)$$

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
E denotes identical or different, monovalent SiC-bonded organic radicals having at least one epoxy group per radical,
a is 0 or 1, on average 0.01 to 1.0,
b is 0, 1, 2 or 3, on average 0.0 to 3.0,
c is 0, 1, 2 or 3, on average 0.0 to 3.0,
and the sum $a + b + c \leqq 4$, on average 1.0 to 4.0.

**3.** Process according to Claim 1 or 2, characterized in that the organosilicon compounds which contain SiC-bonded organic radicals having at least one epoxy group per radical are silanes of the general formula

$ER_dSi(OR^1)_{3-d}$ (II)

in which R denotes identical or different, optionally halogenated hydrocarbon radicals having 1 to 18

carbon atoms per radical,
$R^1$ denotes identical or different, monovalent hydrocarbon radicals which have 1 to 8 carbon atoms per radical and can be substituted by an ether oxygen atom,
E is a monovalent SiC-bonded organic radical having at least one epoxy group per radical and
d is 0, 1 or 2.

**4.** Process according to Claim 1 or 2, characterized in that the organosilicon compounds which contain SiC-bonded organic radicals having at least one epoxy group per radical are organopolysiloxanes of the general formula

$E_eR_{3-e}SiO(SiR_2O)_m(SiREO)_nSiR_{3-e}E_e$ (III)

in which R denotes identical or different, optionally halogenated hydrocarbon radicals having 1 to 18 carbon atoms per radical,
$R^1$ denotes identical or different, monovalent hydrocarbon radicals having 1 to 8 carbon atoms per radical which can be substituted by an ether oxygen atom,
E denotes identical or different, monovalent SiC-bonded organic radicals having at least one epoxy group per radical,
e is 0 or 1,
m is 0 or an integer from 1 to 1,000 and
n is 0 or an integer from 1 to 200.

**5.** Process according to one of Claims 1 to 4, characterized in that E is a radical of the formula

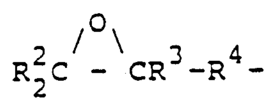 (IV),

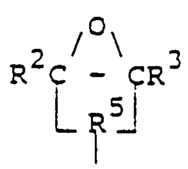 (V) or

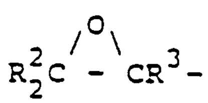 (VI)

in which $R^2$ is identical or different and denotes a hydrogen atom or a monovalent hydrocarbon radical which has 1 to 10 carbon atoms per radical and can be substituted by an ether oxygen atom;
$R^3$ denotes a hydrogen atom or a monovalent hydrocarbon radical which has 1 to 10 carbon atoms per radical and can be substituted by at least one ether oxygen atom,
$R^4$ denotes a divalent hydrocarbon radical which has 1 to 12 carbon atoms per radical and can be substituted by at least one ether oxygen atom and/or by at least one carbonyl group, and
$R^5$ denotes a trivalent hydrocarbon radical having 3 to 12 carbon atoms per radical.

**6.** Process according to one of Claims 1 to 5, characterized in that alkali metal carbonates or alkali metal bicarbonates are used as acid-binding agents.

**7.** Process according to one of Claims 1 to 6, characterized in that chlorohydrocarbons or aromatic hydrocarbons are used as solvents.

**8.** Use of the organopolysiloxanes obtained by means of the process according to Claim 1 or 2 or one of Claims 4 to 7, characterized in that the organopolysiloxanes thus obtained, which contain SiC-bonded

organic radicals having at least one epoxy group per radical, are used, for equilibration, with organopolysiloxanes chosen from the group comprising linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

**9.** Organosilicon compounds which contain SiC-bonded organic radicals having at least one epoxy group per radical, of the general formula

$$E^1_aR_bSi(OR^1)_cO_{\frac{4-(a+b+c)}{2}} \qquad (I')$$

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
$E^1$ denotes a 6,7-epoxy-7-methyloctyl radical,
a is 0 or 1, on average 0.01 to 1.0,
b is 0, 1, 2 or 3, on average 0.0 to 3.0,
c is 0, 1, 2 or 3, on average 0.0 to 3.0,
and the sum $a+b+c \leqq 4$, on average 1.0 to 4.0.

**10.** Organosilicon compounds which contain SiC-bonded organic radicals having at least one epoxy group per radical, of the general formula

$$E^2_aR_bSi(OR^1)_cO_{\frac{4-(a+b+c)}{2}} \qquad (I'')$$

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
$E^2$ denotes an SiC-bonded radical of the formula

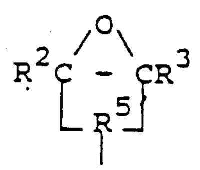

(V')

in which $R^2$ denotes a hydrogen atom or a monovalent hydrocarbon radical which has 1 to 10 carbon atoms per radical and can be substituted by at least one ether oxygen atom,
$R^3$ denotes a hydrogen atom or a monovalent hydrocarbon radical which has 1 to 10 carbon atoms per radical and can be substituted by at least one ether oxygen atom and $R^{5'}$ denotes a trivalent cyclic or bicyclic hydrocarbon radical having 4 to 12 carbon atoms per radical, with the proviso that the silicon atom is bonded directly to the ring system,
a is 0 or 1, on average 0.01 to 1.0,
b is 0, 1, 2 or 3, on average 0.0 to 3.0,
c is 0, 1, 2 or 3, on average 0.0 to 3.0,
and the sum $a+b+c \leqq 4$, on average 1.0 to 4.0.

**11.** Organosilicon compounds according to Claim 10, characterized in that they are disiloxanes of the general formula

$E^2R_2SiOSiR_2E^2$ (III')

in which $E^2$ denotes a 5,6-epoxynorbornan-2-yl radical or a 3,4-epoxytricyclo[5.2.1.0$^{2.6}$]decan-8(9)-yl radical, and R denotes identical or different, optionally halogenated hydrocarbon radicals having 1 to 18 carbon atoms per radical.

**Claims for the following Contracting State : ES**

**1.** Process for the preparation of organosilicon compounds which contain SiC-bonded organic radicals having at least one epoxy group per radical by epoxidation of organosilicon compounds which contain SiC-bonded organic radicals having at least one carbon-carbon double bond per radical with peracetic acid which contains acetic acid and catalytic amounts of a strong acid, in the presence of organic solvents and acid-binding agents, characterized in that the strong acid is bonded with at least an equivalent amount of a base before the epoxidation with peracetic acid, and 0.4 to 0.8 equivalent of acid-binding agents per mol of total acid comprising peracetic acid and acetic acid is employed during the epoxidation.

**2.** Process according to Claim 1, characterized in that organosilicon compounds which contain SiC-bonded organic radicals having at least one epoxy group per radical are those of the general formula

$$E_aR_bSi(OR^1)_cO_{\frac{4-(a+b+c)}{2}} \qquad (I)$$

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
E denotes identical or different, monovalent SiC-bonded organic radicals having at least one epoxy group per radical,
a is 0 or 1, on average 0.01 to 1.0,
b is 0, 1, 2 or 3, on average 0.0 to 3.0,
c is 0, 1, 2 or 3, on average 0.0 to 3.0,
and the sum $a + b + c \leqq 4$, on average 1.0 to 4.0.

**3.** Process according to Claim 1 or 2, characterized in that the organosilicon compounds which contain SiC-bonded organic radicals having at least one epoxy group per radical are silanes of the general formula

$ER_dSi(OR^1)_{3-d}$ (II)

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
E is a monovalent SiC-bonded organic radical having at least one epoxy group per radical and
d is 0, 1 or 2.

**4.** Process according to Claim 1 or 2, characterized in that the organosilicon compounds which contain SiC-bonded organic radicals having at least one epoxy group per radical are organopolysiloxanes of the general formula

$E_eR_{3-e}SiO(SiR_2O)_m(SiREO)_nSiR_{3-e}E_e$ (III)

in which R denotes identical or different, optionally halogenated hydrocarbon radicals having 1 to 18 carbon atoms per radical, $R^1$ denotes identical or different, monovalent hydrocarbon radicals having 1 to 8 carbon atoms per radical which can be substituted by an ether oxygen atom, E denotes identical or different, monovalent SiC-bonded organic radicals having at least one epoxy group per radical, e is 0 or 1, m is 0 or an integer from 1 to 1,000 and n is 0 or an integer from 1 to 200.

**5.** Process according to one of Claims 1 to 4, characterized in that E is a radical of the formula

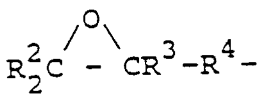 (IV),

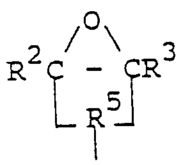 (V) or

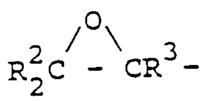 (VI)

in which $R^2$ is identical or different and denotes a hydrogen atom or a monovalent hydrocarbon radical which has 1 to 10 carbon atoms per radical and can be substituted by an ether oxygen atom, $R^3$ denotes a hydrogen atom or a monovalent hydrocarbon radical which has 1 to 10 carbon atoms per radical and can be substituted by at least one ether oxygen atom, $R^4$ denotes a divalent hydrocarbon radical which has 1 to 12 carbon atoms per radical and can be substituted by at least one ether oxygen atom and/or by at least one carbonyl group, and $R^5$ denotes a trivalent hydrocarbon radical having 3 to 12 carbon atoms per radical.

**6.** Process according to one of Claims 1 to 5, characterized in that alkali metal carbonates or alkali metal bicarbonates are used as acid-binding agents.

**7.** Process according to one of Claims 1 to 6, characterized in that chlorohydrocarbons or aromatic hydrocarbons are used as solvents.

**8.** Use of the organopolysiloxanes obtained by means of the process according to Claim 1 or 2 or one of Claims 4 to 7, characterized in that the organopolysiloxanes thus obtained, which contain SiC-bonded organic radicals having at least one epoxy group per radical, are used, for equilibration, with organopolysiloxanes chosen from the group comprising linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

**9.** Process for the preparation of organosilicon compounds which contain SiC-bonded organic radicals having at least one epoxy group per radical, of the general formula

$$E^1_aR_bSi(OR^1)_cO_{\frac{4-(a+b+c)}{2}} \quad (I')$$

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
$E^1$ denotes a 6,7-epoxy-7-methyloctyl radical,
a is 0 or 1, on average 0.01 to 1.0,
b is 0, 1, 2 or 3, on average 0.0 to 3.0,
c is 0, 1, 2 or 3, on average 0.0 to 3.0,
and the sum $a+b+c \leqq 4$, on average 1.0 to 4.0 by epoxidation of suitable organosilicon compounds which contain SiC-bonded organic radicals having at least one carbon-carbon double bond per radical with peracetic acid which contains acetic acid and catalytic amounts of a strong acid, in the presence of organic solvents and acid-binding agents, the strong acid being bonded with at least an equivalent amount of a base before the epoxidation with peracetic acid, and 0.4 to 0.8 equivalent of acid-binding agents per mol of total acid comprising peracetic acid and acetic acid being employed during the epoxidation.

**10.** Process for the preparation of organosilicon compounds which contain SiC-bonded organic radicals having at least one epoxy group per radical, of the general formula

$$E^2_a R_b Si(OR^1)_c O_{\frac{4-(a+b+c)}{2}} \qquad (I'')$$

in which R denotes identical or different, optionally halogenated hydrocarbon radicals having 1 to 18 carbon atoms per radical,
$R^1$ denotes identical or different, monovalent hydrocarbon radicals which have 1 to 8 carbon atoms per radical and can be substituted by an ether oxygen atom,
$E^2$ denotes an SiC-bonded radical of the formula

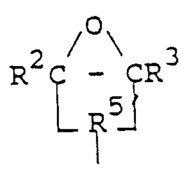

(V')

in which $R^2$ denotes a hydrogen atom or a monovalent hydrocarbon radical which has 1 to 10 carbon atoms per radical and can be substituted by at least one ether oxygen atom,
$R^3$ denotes a hydrogen atom or a monovalent hydrocarbon radical which has 1 to 10 carbon atoms per radical and can be substituted by at least one ether oxygen atom and $R^{5'}$ denotes a trivalent cyclic or bicyclic hydrocarbon radical having 4 to 12 carbon atoms per radical, with the proviso that the silicon atom is bonded directly to the ring system,
a is 0 or 1, on average 0.01 to 1.0,
b is 0, 1, 2 or 3, on average 0.0 to 3.0,
c is 0, 1, 2 or 3, on average 0.0 to 3.0,
and the sum $a+b+c \leqq 4$, on average 1.0 to 4.0 by epoxidation of suitable organosilicon compounds which contain SiC-bonded organic radicals having at least one carbon-carbon double bond per radical with peracetic acid which contains acetic acid and catalytic amounts of a strong acid, in the presence of organic solvents and acid-binding agents, the strong acid being bonded with at least an equivalent amount of a base before the epoxidation with peracetic acid, and 0.4 to 0.8 equivalent of acid-binding agents per mol of total acid comprising peracetic acid and acetic acid being employed during the epoxidation.

**11.** Process according to Claim 10 for the preparation organosilicon compounds which, are disiloxanes of the general formula

$E^2R_2SiOSiR_2E^2$ (III')

in which $E^2$ denotes a 5,6-epoxynorbornan-2-yl radical or a 3,4-epoxytricyclo[5.2.1.$0^{2.6}$]decan-8(9)-yl radical, and R denotes identical or different, optionally halogenated hydrocarbon radicals having 1 to 18 carbon atoms per radical by epoxidation of suitable organosilicon compounds which contain SiC-bonded organic radicals having at least one carbon-carbon double bond per radical with peracetic acid which contains acetic acid and catalytic amounts of a strong acid, in the presence of organic solvents and acid-binding agents, the strong acid being bonded with at least an equivalent amount of a base before the epoxidation with peracetic acid, and 0.4 to 0.8 equivalent of acid-binding agents per mol of total acid comprising peracetic acid and acetic acid being employed during the epoxidation.

**Revendications**

**Revendications pour les Etats contractants suivants : AT, BE, CH, LI, DE, FR, GB, IT, NL**

1. Procédé pour la préparation de composés organosiliciés qui contiennent des radicaux organiques liés à SiC avec au moins un groupe époxy par radical, par époxydation de composés organosiliciés qui contiennent des radicaux organiques liés à SiC avec au moins une double liaison carbone-carbone par radical, avec l'acide peracétique qui contient l'acide acétique et des quantités catalytiques d'un acide fort, en présence de solvants organiques et d'agents de fixation d'acides, caractérisé en ce que l'acide fort, avant l'époxydation avec l'acide peracétique, est lié à une quantité au moins équivalente d'une base et qu'au cours de l'époxydation sont présents de 0,4 à 0,8 val d'agent fixation d'acides par mole de la quantité totale d'acide peracétique et d'acide acétique.

2. Procédé selon la revendication 1, caractérisé en ce que les composés organosiliciés, qui contiennent des radicaux organiques liés à SiC avec au moins un groupe époxy par radical, répondent à la formule générale :

$$E_aR_bSi(OR^1)_cO_{\frac{4-(a+b+c)}{2}} \qquad (I),$$

où les radicaux R, identiques ou différents, représentent des radicaux hydrocarbonés éventuellement halogénés avec 1 à 18 atomes de carbone par radical,
les radicaux $R^1$, identiques ou différents, représentent des radicaux hydrocarbonés monovalents avec 1 à 8 atomes de carbone par radical qui peuvent être substitués par un atome d'oxygène d'éther,
les radicaux E, identiques ou différents, représentent des radicaux organiques liés à SiC avec au moins un groupe époxy par radical,
a est 0 ou 1, en moyenne de 0,01 à 1,0,
b est 0, 1, 2 ou 3, en moyenne de 0,0 à 3,0,
c est 0, 1, 2 ou 3, en moyenne de 0,0 à 3,0 et
la somme $a+b+c \leqq 4$, en moyenne de 1,0 à 4,0.

3. Procédé selon la revendication 1 ou 2, caractérisé en ce que les composés organosiliciés, qui contiennent des radicaux organiques liés à SiC avec au moins un groupe époxy par radical, sont des silanes de formule générale :

$ER_dSi(OR^1)_{3-d}$ (II),

où les radicaux R, identiques ou différents, représentent des radicaux hydrocarbonés éventuellement halogénés avec 1 à 18 atomes de carbone par radical,
les radicaux $R^1$, identiques ou différents, représentent des radicaux hydrocarbonés monovalents avec 1 à 8 atomes de carbone par radical qui peuvent être substitués par des atomes d'oxygène d'éther,
E représente un radical organique monovalent lié à SiC avec au moins un groupe époxy par radical, et
d est 0, 1 ou 2.

4. Procédé selon la revendication 1 ou 2, caractérisé en ce que les composés organosiliciés, qui contiennent des radicaux organiques liés à SiC avec au moins un groupe époxy par radical, sont des

organo(poly)siloxanes de formule générale :

$E_eR_{3-e}SiO(SiR_2O)_m(SiREO)_nSiR_{3-e}E_e$ (III),

où les radicaux R, identiques ou différents, représentent des radicaux hydrocarbonés éventuellement halogénés avec 1 à 18 atomes de carbone par radical,
les radicaux $R^1$, identiques ou différents, représentent des radicaux hydrocarbonés monovalents avec 1 à 8 atomes de carbone par radical qui peuvent être substitués par un atome d'oxygène d'éther,
les radicaux E, identiques ou différents, représentent des radicaux organiques liés à SiC avec au moins un groupe époxy par radical,
e est 0 ou 1,
m est 0 ou représente un nombre entier de 1 à 1000, et
n est 0 ou représente un nombre entier de 1 à 200.

**5.** Procédé selon l'une des revendications 1 à 4, caractérisé en ce que E est un radical de formules :

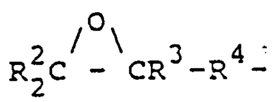
(IV),

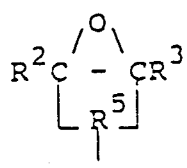
(V) ou

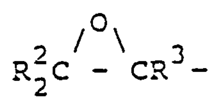
(VI)

où les radicaux $R^2$ sont identiques ou différents et représentent un atome d'hydrogène ou un radical hydrocarboné monovalent avec 1 à 10 atomes de carbone par radical qui peut être substitué par au moins un atome d'oxygène d'éther,
$R^3$ représente un atome d'hydrogène ou un radical hydrocarboné monovalent avec 1 à 10 atomes de carbone par radical, qui peut être substitué par au moins un atome d'oxygène d'éther,
$R^4$ représente un radical hydrocarboné bivalent avec 1 à 12 atomes de carbone par radical, qui peut être substitué par au moins un atome d'oxygène d'éther et/ou par au moins un groupe carbonyle, et
$R^5$ représente un radical hydrocarboné trivalent avec 3 à 12 atomes de carbone par radical.

**6.** Procédé selon l'une des revendications 1 à 5, caractérisé en ce qu'on utilise en tant qu'agents de fixation d'acides des carbonates alcalins ou des bicarbonates alcalins.

**7.** Procédé selon l'une des revendications 1 à 6, caractérisé en ce qu'on utilise en tant que solvants des hydrocarbures chlorés ou des hydrocarbures aromatiques.

**8.** Utilisation des organo(poly)siloxanes obtenus selon le procédé selon la revendication 1 ou 2 ou selon l'une des revendications 4 à 7, caractérisé en ce que les organo(poly)siloxanes ainsi obtenus qui contiennent des radicaux organiques liés à SiC avec au moins un groupe époxy par radical, sont utilisés pour l'équilibrage avec des organo(poly)siloxanes pris dans le groupe composé d'organo(poly)-siloxanes linéaires présentant des groupes triorganosiloxy terminaux, d'organo(poly)siloxanes linéaires présentant des groupes hydroxyle terminaux, d'organo(poly)siloxanes cycliques et des polymères mixtes constitués d'unités diorganosiloxanes et monoorganosiloxanes.

**9.** Composés organosiliciés qui contiennent des radicaux organiques liés à SiC avec au moins un groupe époxy par radical, de formule générale :

$$E^1_aR_bSi(OR^1)_cO_{\frac{4-(a+b+c)}{2}} \qquad (I'),$$

où les radicaux R, identiques ou différents, représentent des radicaux hydrocarbonés éventuellement halogénés avec 1 à 18 atomes de carbone par radical,
les radicaux $R^1$, identiques ou différents, représentent des radicaux hydrocarbonés monovalents avec 1 à 8 atomes de carbone par radical qui peuvent être substitués par un atome d'oxygène d'éther,
$E^1$ représente un radical 6,7-époxy-7-méthyloctyle,
a est 0 ou 1, en moyenne de 0,01 à 1,0,
b est 0, 1, 2 ou 3, en moyenne de 0,0 à 3,0,
c est 0, 1, 2 ou 3, en moyenne de 0,0 à 3,0 et
la somme $a+b+c \leqq 4$, en moyenne de 1,0 à 4,0.

**10.** Composés organosiliciés qui contiennent des radicaux organiques liés à SiC avec au moins un groupe époxy par radical, de formule générale :

$$E^2_aR_bSi(OR^1)_cO_{\frac{4-(a+b+c)}{2}} \qquad (I''),$$

où les radicaux R, identiques ou différents, représentent des radicaux hydrocarbonés éventuellement halogénés avec 1 à 18 atomes de carbone par radical, les radicaux $R^1$ identiques ou différents, représentent des radicaux hydrocarbonés monovalents avec 1 à 18 atomes de carbone par radical, qui peuvent être substitués par un atome d'oxygène d'éther,
$E^2$ représente un radical lié à SiC de formule :

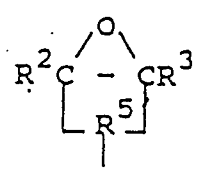

(V')

où $R^2$ représente un atome d'hydrogène ou un radical hydrocarboné monovalent avec 1 à 10 atomes de carbone par radical, qui peut être substitué par au moins un atome d'oxygène d'éther,
$R^3$ représente un atome d'hydrogène ou un radical hydrocarboné monovalent avec 1 à 10 atomes de carbone par radical, qui peut être substitué par au moins un atome d'oxygène d'éther, et
$R^{5'}$ représente un radical hydrocarboné trivalent cyclique ou bicyclique avec 4 à 12 atomes de carbone par radical, à la condition que l'atome de silicium soit lié directement au système de cycles,
a est 0 ou 1, en moyenne de 0,01 à 1,0,
b est 0, 1, 2 ou 3, en moyenne de 0,0 à 3,0,
c est 0, 1, 2 ou 3, en moyenne de 0,0 à 3,0 et
la somme $a+b+c \leqq 4$, en moyenne de 1,0 à 4,0.

**11.** Composés organosiliciés selon la revendication 10, caractérisés en ce qu'ils représentent des disiloxanes de formule générale :

$E^2R_2SiOSiR_2E^2$ (III')

où
$E^2$ représente un radical 5,6-époxynorbornan-2-yle ou un radical 3,4-époxytricyclo[5.2.1.0$^{2,6}$]décane-8-(9)-yle, et les radicaux R identiques ou différents représentent des radicaux hydrocarbonés éventuellement halogénés avec 1 à 18 atomes de carbone par radical.

**Revendications pour l'Etat contractant suivant : ES**

1. Procédé de préparation de composés organosiliciés, qui contiennent des restes organiques liés à SiC avec au moins un groupe époxy dans chaque reste, par époxydation de composés organosiliciés, qui contiennent des restes organiques liés à SiC ayant au moins une double liaison carbone-carbone par reste, avec de l'acide peracétique, qui contient de l'acide acétique et des quantités catalytiques d'un acide plus fort, en présence de solvants organiques et d'agents se liant aux acides, caractérisé en ce que l'acide fort est lié, avant l'époxydation par l'acide peracétique, avec une quantité au moins équivalente d'une base et, pendant l'époxydation, de 0,4 à 0,8 équivalent en agent se liant aux acides est présent par mole d'acide total en acide peracétique et acide acétique.

2. Procédé selon la revendication 1, caractérisé en ce que les composés organosiliciés, qui contiennent des restes organiques liés à SiC ayant au moins un groupe époxy par reste, sont ceux de formule générale

$$E_aR_bSi(OR^1)_cO_{\frac{4-(a+b+c)}{2}} \quad (I),$$

où les restes R, identiques ou différents, signifient des restes hydrocarbonés éventuellement halogénés ayant de 1 à 18 atomes de carbone par reste,
les restes $R^1$, identiques ou différents, signifient des restes hydrocarbonés monovalents ayant de 1 à 8 atomes de carbone par reste, qui peuvent être substitués par un atome d'oxygène d'éther,
les restes E, identiques ou différents, signifient des restes organiques monovalents liés à SiC, ayant au moins un groupe époxy par reste,
a vaut 0 ou 1, en moyenne va de 0,01 à 1,0,
b vaut 0, 1, 2 ou 3, en moyenne va de 0,0 à 3,0,
c vaut 0, 1, 2 ou 3, en moyenne va de 0,0 à 3,0,
et la somme a + b + c est inférieure ou égale à 4, en moyenne va de 1,0 à 4,0.

3. Procédé selon la revendication 1 ou 2, caractérisé en ce que les composés organosiliciés, qui contiennent des restes organiques liés à SiC ayant au moins un groupe époxy par reste, sont des silanes de formule générale

$$ER_dSi(OR^1)_{3-d} \quad (II),$$

où les restes R, identiques ou différents, signifient des restes hydrocarbonés éventuellement halogénés ayant de 1 à 18 atomes de carbone par reste,
les restes $R^1$, identiques ou différents, signifient des restes hydrocarbonés monovalents ayant de 1 à 8 atomes de carbone par reste, qui peuvent être substitués par un atome d'oxygène d'éther,
le reste E est un reste organique monovalent lié à SiC ayant au moins un groupe époxy par reste et
d vaut 0, 1 ou 2.

4. Procédé selon la revendication 1 ou 2, caractérisé en ce que les composés organosiliciés, qui contiennent des restes organiques liés à SiC ayant au moins un groupe époxy par reste, sont des organopolysiloxanes de formule générale

$$E_eR_{3-e}SiO(SiR_2O)_m(SiREO)_nSiR_{3-e}E_e \quad (III),$$

où les restes R, identiques ou différents, signifient des restes hydrocarbonés éventuellement halogénés ayant de 1 à 18 atomes de carbone par reste,
les restes $R^1$, identiques ou différents, signifient des restes hydrocarbonés monovalents ayant de 1 à 8 atomes de carbone par reste, qui peuvent être substitués par un atome d'oxygène d'éther,
les restes E, identiques ou différents, signifient des restes organiques monovalents liés à SiC ayant au moins un groupe époxy par reste,

e vaut 0 ou 1,
m vaut 0 ou est un nombre entier compris entre 1 et 1000 et
n vaut 0 ou est un nombre entier compris entre 1 et 200.

**5.** Procédé selon l'une des revendications 1 à 4, caractérisé en ce que E est un reste de formule

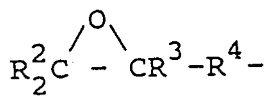
(IV),

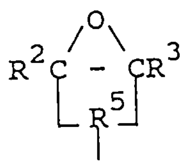
(V) ou

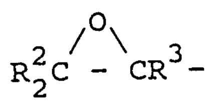
(VI),

où $R^2$, identique ou différent, signifie un atome d'hydrogène ou un reste hydrocarboné monovalent ayant de 1 à 10 atomes de carbone par reste, qui peut être substitué par au moins un atome d'oxygène d'éther,
$R^3$ signifie un atome d'hydrogène ou un reste hydrocarboné monovalent ayant de 1 à 10 atomes de carbone par reste, qui peut être substitué par au moins un atome d'oxygène d'éther,
$R^4$ signifie un reste hydrocarboné divalent ayant de 1 à 12 atomes de carbone par reste, qui peut être substitué par au moins un atome d'oxygène d'éther et/ou par au moins un groupe carbonyle et
$R^5$ est un reste hydrocarboné trivalent ayant de 3 à 12 atomes de carbone par reste.

**6.** Procédé selon l'une des revendications 1 à 5, caractérisé en ce que l'on utilise, comme agents se liant aux acides, des carbonates de métaux alcalins ou bien des hydrogénocarbonates de métaux alcalins.

**7.** Procédé selon l'une des revendications 1 à 6, caractérisé en ce que l'on utilise, comme solvants, des hydrocarbures chlorés ou bien des hydrocarbures aromatiques.

**8.** Utilisation d'organopolysiloxanes obtenus par le procédé selon la revendication 1 ou 2 ou bien l'une des revendications 4 à 7, caractérisée en ce que l'on utilise les organopolysiloxanes ainsi obtenus, qui contiennent des restes organiques liés à SiC ayant au moins un groupe époxy par reste, en vue d'un équilibrage avec des organopolysiloxanes choisis dans le groupe formé d'organopolysiloxanes linéaires possédant des groupes terminaux triorganosiloxy, des organopolysiloxanes linéaires, possédant des groupes terminaux hydroxyle, des organopolysiloxanes cycliques et des polymérisats mixtes à base d'unités diorganosiloxane et monoorganosiloxane.

**9.** Procédé de préparation de composés organosiliciés, qui contiennent des restes organiques liés à SiC ayant au moins un groupe époxy par reste, de formule générale

$$E^1_aR_bSi(OR^1)_cO_{\frac{4-(a+b+c)}{2}} \qquad (I'),$$

les restes R, identiques ou différents, signifiant des restes hydrocarbonés éventuellement halogénés ayant de 1 à 18 atomes de carbone par reste,
les restes $R^1$, identiques ou différents, signifiant des restes hydrocarbonés monovalents ayant de 1 à 8 atomes de carbone par reste, qui peuvent être substitués par un atome d'oxygène d'éther,

$E^1$ signifiant un reste 6,7-époxy-7-méthyloctyle,
a vallant 0 ou 1, en moyenne va de 0,01 à 1,0,
b vallant 0, 1, 2 ou 3, en moyenne va de 0,0 à 3,0,
c vallant 0, 1, 2 ou 3, en moyenne va de 0,0 à 3,0,
et la somme a + b + c étant inférieure ou égale à 4, en moyenne allant de 1,0 à 4,0,
par époxydation de composés organosiliciés appropriés, qui contiennent des restes organiques liés à SiC ayant au moins une double liaison carbone-carbone par reste, avec de l'acide peracétique, qui contient de l'acide acétique et une quantité catalytique en acide plus fort, en présence de solvants organiques et d'agents se liant aux acides, l'acide fort étant lié, avant l'époxydation par l'acide peracétique, avec une quantité au moins équivalente d'une base et, pendant l'époxydation, de 0,4 à 0,8 équivalent en agent se liant aux acides étant présent par mole d'acide total en acide peracétique et en acide acétique.

**10.** Procédé de préparation de composés organosiliciés, qui contiennent des restes organiques liés à SiC ayant au moins un groupe époxy par reste, de formule générale

$$E^2_aR_bSi(OR^1)_cO_{\frac{4-(a+b+c)}{2}} \qquad (I''),$$

les restes R, identiques ou différents, signifiant des restes hydrocarbonés éventuellement halogénés ayant de 1 à 18 atomes de carbone par reste,
les restes $R^1$, identiques ou différents, signifiant des restes hydrocarbonés monovalents ayant de 1 à 8 atomes de carbone par reste, qui peuvent être substitués par un atome d'oxygène d'éther,
le reste $E^2$ signifiant un reste lié à SiC de formule

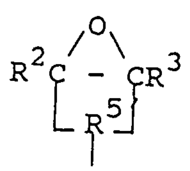

(V'),

dans laquelle $R^2$ signifie un atome d'hydrogène ou un reste hydrocarboné monovalent ayant de 1 à 10 atomes de carbone par reste, qui peut être substitué par au moins un atome d'oxygène d'éther,
$R^3$ signifie un atome d'hydrogène ou un reste hydrocarboné monovalent ayant de 1 à 10 atomes de carbone par reste, qui peut être substitué par au moins un atome d'oxygène d'éther et
$R^{5}$' signifie un reste hydrocarboné divalent, cyclique ou bicyclique, ayant de 4 à 12 atomes de carbone par reste, avec la condition que l'atome de silicium est directement lié au système cyclique,
a vaut 0 ou 1, en moyenne va de 0,01 à 1,0,
b vaut 0, 1, 2 ou 3, en moyenne va de 0,0 à 3,0,
c vaut 0, 1, 2 ou 3, en moyenne va de 0,0 à 3,0,
et la somme a + b + c est inférieure ou égale à 4, en moyenne va de 1,0 à 4,0,
par époxydation de composés organosiliciés appropriés, qui contiennent des restes organiques liés à SiC ayant au moins une double liaison carbone-carbone par reste, avec de l'acide peracétique, qui contient de l'acide acétique et des quantités catalytiques en acide plus fort, en présence de solvants organiques et d'agents se liant aux acides, l'acide fort étant lié, avant l'époxydation par l'acide peracétique, avec une quantité au moins équivalente d'une base et, pendant l'époxydation, de 0,4 à 0,8 équivalent en agent se liant aux acides étant présent par mole d'acide total en acide peracétique et en acide acétique.

**11.** Procédé selon la revendication 10 de préparation de composés organosiliciés, qui sont des disiloxanes de formule générale

$E^2R_2SiOSiR_2E^2$ (III'),

$E^2$ signifiant un reste 5,6-époxynorbornan-2-yle ou un reste 3,4-époxytricyclo[5.2.1.$0^{2,6}$]décan-8(9)-yle et les restes R, identiques ou différents, signifient des restes hydrocarbonés éventuellement halogénés ayant de 1 à 18 atomes de carbone par reste,
par époxydation de composés organosiliciés appropriés, qui contiennent des restes organiques liés à SiC ayant au moins une double liaison carbone-carbone par reste, avec de l'acide peracétique, qui contient de l'acide acétique et des quantités catalytiques en acide plus fort, en présence de solvants organiques et d'agents se liant aux acides, l'acide fort étant lié, avant l'époxydation par l'acide peracétique, avec une quantité au moins équivalente d'une base et, pendant l'époxydation, de 0,4 à 0,8 équivalent en agent se liant aux acides étant présent par mole d'acide total en acide peracétique et en acide acétique.